# EUROPEAN PATENT APPLICATION

(11) **EP 4 455 966 A1**
(43) Date of publication of application: **30.10.2024**
(21) Application number: 24171983.0
(22) Date of filing: 23.04.2024
(51) Int. Cl.: G06Q 10/101, G06F 16/215, G06Q 10/10

(54) **SYSTEMS AND METHODS FOR COLLABORATIVE CONTENT CREATION IN COMPUTING ENVIRONMENT**

(30) Priority: 25.04.2023 US 202318139280
(71) Applicant: TMRW Foundation IP SARL, 2310 Luxembourg (LU)
(72) Inventor: Yerli, Cevat, Dubai (AE)
(74) Representative: Dentons UK and Middle East LLP

(57) **Abstract**

A method for executing collaborative content creation in a computing environment using artificial intelligence. The method includes receiving, by a content creation system, a first input from a first user and a second input from a second user, analyzing, by an input fusion system, the first input and the second input to determine a presence of duplicate data, redundancy data, and/or prompt data by using a machine learning model, upon determining the presence of the prompt data from at least one of the first input or the second input, transmitting, by the input fusion system, the prompt data to an action generation system, generating, by the action generation system, first action data based on the prompt data and the machine learning model, and executing, by the action generation system, a first action in the computing environment based on the first action data.

## Description

### TECHNICAL FIELD

The present disclosure relates to creating contents in computing environments, more particularly, to systems and methods for executing collaborative content creation using artificial intelligence to enable multiple users to co-create contents in a virtual environment with enhanced creative capabilities and/or effects.

### BACKGROUND

Current technologies allow human users to provide certain commands (e.g., through voice or typing) to a computer program including artificial intelligence (AI) to enable the AI to perform certain activities. Some of the activities performed by the AI are creative activities that require a certain level of training of Al algorithms. For example, existing AI platforms (e.g., Siri, ChatGPT, DALL-E, Mid-Journey, Stable Diffusion, etc.) all train computer models that can be used to create contents that respond to requests of a user.

Notably, human beings are naturally social beings, and in many instances, the creative capabilities of human beings are enhanced when interacting and creating contents together. However, current systems and methods do not enable humans to co-create with the help of AI computer models. Instead, current systems and methods focus on creations that occur at an individual level. Accordingly, social, and creative aspects of creation that could be achieved, with the help of the developing AI technologies, collaboratively between multiple users are limited. For example, technologies utilizing current AI platforms (e.g., Siri, ChatGPT, DALL-E, Mid-Journey, Stable Diffusion, etc.) can convert voice to text and submit the text to a server, where the voice to text conversion can happen at the edge or cloud. The server may then send the text to an AI. Alternatively, users may manually type and input one or more prompts into a computer to be sent to an AI, and some systems can create images or different types of contents based on the user's input. However, all of the existing systems merely capture input commands from a single user and translate the input commands into corresponding actions. That is, none of the existing systems enable a collaborative and creative aspect of creating contents by multiple users.

The present disclosure is directed to overcoming one or more of these above-referenced challenges and deficiencies. The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### SUMMARY

According to certain aspects of the present disclosure, systems and methods are provided for executing collaborative content creation using artificial intelligence to enable multiple users to co-create contents in a virtual environment with enhanced creative capabilities and/or effects.

According to one aspect, a method is provided for executing collaborative content creation in a computing environment using artificial intelligence. The method may include: receiving, by a content creation system, a first input from a first user and a second input from a second user; analyzing, by an input fusion system, the first input and the second input to determine a presence of duplicate data, redundancy data, and/or prompt data by using a machine learning model; upon determining the presence of the prompt data from at least one of the first input or the second input, transmitting, by the input fusion system, the prompt data to an action generation system; generating, by the action generation system, first action data based on the prompt data and the machine learning model; and executing, by the action generation system, a first action in the computing environment based on the first action data.

In other aspects, any of the methods described herein may include any of the following steps or features. The input fusion system may remove the duplicate data from at least one of the first input or the second input upon determining the presence of the duplicate data in at least one of the first input or the second input. The input fusion system may remove the duplicate data and the redundancy data from at least one of the first input or the second input Upon determining the presence of the duplicate data and the redundancy data in at least one of the first input or the second input. At least one of the first input or the second input may include text data. The input fusion system may convert at least one of the first input or the second input into converted data. At least one of the first input or the second input may include at least one of image data, audio data, or haptic data. The converted data may include converted text data. The input fusion system may remove text data corresponding to at least one of the duplicate data or the redundancy data from the converted text data upon determining the presence of the duplicate data or the redundancy data. The machine learning model may facilitate determining the presence of the duplicate data, the redundancy data, and/or the prompt data based on a direct user input or an indirect user input. The computing environment may be a virtual environment. The computing environment may be an augmented environment. The first action may be creating or modifying an element in a space of the virtual environment. The element may be at least one of a visual element or an audio element. The first input and the second input may be received synchronously. The first input and the second input may be received asynchronously. The content creation system may generate a signal for displaying a graphical interface to the first user or the second user. The content creation system may receive a selection command from the first user or the second user. The content creation system may provide a user created element in the computing environment based on the selection command. The graphical interface may include an adjustable timeline. The selection command may select a time period on the adjustable timeline. The user created element may be selected by the content creation system based on the time period.

According to one aspect, a computer system may be provided for executing collaborative content creation in a computing environment using artificial intelligence. The computer system may include a memory storing instructions and one or more processors configured to execute the instructions to perform operations. The operations may include: receiving, by a content creation system, a first input from a first user and a second input from a second user, analyzing, by an input fusion system, the first input and the second input to determine a presence of duplicate data, redundancy data, and/or prompt data by using a machine learning model, upon determining the presence of the prompt data from at least one of the first input or the second input, transmitting, by the input fusion system, the prompt data to an action generation system, generating, by the action generation system, first action data based on the prompt data and the machine learning model; and executing, by the action generation system, a first action in the computing environment based on the first action data.

In other aspects, any of the systems described herein may include any of the following steps or features. The input fusion system may remove the duplicate data from at least one of the first input or the second input upon determining the presence of the duplicate data. The input fusion system may remove the duplicate data and the redundancy data from at least one of the first input or the second input upon determining the presence of the duplicate data and the redundancy data. At least one of the first input or the second input may include text data. The input fusion system may convert at least one of the first input or the second input into converted data. At least one of the first input or the second input may include at least one of image data, audio data, or haptic data. The converted data may include converted text data. The input fusion system may remove text data corresponding to at least one of the duplicate data or the redundancy data from the converted text data upon determining the presence of the duplicate data or the redundancy data. The machine learning model may facilitate determining the presence of the duplicate data, the redundancy data, and/or the prompt data based on a direct user input or an indirect user input. The computing environment may be a virtual environment. The computing environment may be an augmented environment. The first action may be creating or modifying an element in a space of the virtual environment. The element may be at least one of a visual element or an audio element. The first input and the second input may be received synchronously. The first input and the second input may be received asynchronously.

According to one aspect, a non-transitory computer-readable medium may store instructions that, when executed by one or more processors of a computer system, cause the computer system to perform a method for executing collaborative content creation in a computing environment using artificial intelligence. The method may include: receiving, by a content creation system, a first input from a first user and a second input from a second user, analyzing, by an input fusion system, the first input and the second input to detect at least one of duplicate data, redundancy data, or prompt data by using a machine learning model, upon detecting the prompt data from at least one of the first input or the second input, transmitting, by the input fusion system, the prompt data to an action generation system, generating, by the action generation system, first action data based on the prompt data and the machine learning model; and executing, by the action generation system, a first action in the computing environment based on the first action data.

According to one aspect, a method may be provided for executing content creation in a computing environment using artificial intelligence. The method may include: receiving, by a content creation system, a first input and a second input, analyzing, by an input fusion system, the first input and the second input to determine a presence of duplicate data, redundancy data, and/or prompt data by using a machine learning model, upon determining the presence of the prompt data from at least one of the first input or the second input, transmitting, by the input fusion system, the prompt data to an action generation system, generating, by the action generation system, first action data based on the prompt data and the machine learning model; and executing, by the action generation system, a first action in the computing environment based on the first action data.

In other aspects, any of the methods described herein may include any of the following steps or features. The first input and the second input may be received asynchronously. The first input and the second input may be received synchronously.

It may be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate exemplary aspects of the disclosure and together with the description, serve to explain the principles of the present disclosure.
FIG. 1 depicts an overview of an example environment in which systems, methods, and other aspects of the present disclosure may be implemented.
FIG. 2 depicts a block diagram of an exemplary system for generating content creation data in a computing environment, according to aspects of the present disclosure.
FIG. 3 depicts an exemplary computing environment executing collaborative contention creation using artificial intelligence, according to aspects of the present disclosure
FIG. 4 depicts a flowchart of an exemplary method of executing collaborative content creation using artificial intelligence in a computing environment, according to aspects of the present disclosure.
FIG. 5 depicts an exemplary user interface executing collaborative contention creation using artificial intelligence in a computing environment, according to aspects of the present disclosure.
FIG. 6 depicts a flowchart of another exemplary method for executing collaborative content creation in a computing environment, according to aspects of the present disclosure.
FIG. 7 depicts a computer system that may execute the techniques described herein.

### DETAILED DESCRIPTION

The following embodiments describe systems and methods for executing collaborative content creation using artificial intelligence to enable multiple users to co-create contents in a computing environment (e.g., an augmented reality environment, a virtual reality environment, and 2-dimensional (2-D) or 3-dimensional (3-D) simulated environments) with enhanced creative capabilities and/or effects. As described above, the existing systems utilize AI functions on an individual level. That is, a user may provide one or more input commands to an AI system, and the AI system provides a solution or response in a limited and unidirectional approach. As such, currently there is no technical solution for facilitating collaborative content creation by multiple users in a computing environment utilizing an artificial intelligence platform. As such, a need exists for systems and methods that can facilitate a multidirectional and synchronous approach to achieving creative functions at a collaborative level, which could enable co-creation between multiple users in a natural way. Such collaborative interaction between multiple users can create a feeling of users simply having a conversation between each other. That is, the systems and methods of the present disclosure could automatically and intuitively detect important keywords during the conversion to convert the keywords into prompts that can be translated to creative actions in a computing environment (e.g., an augmented reality environment, a virtual reality environment, and 2-dimensional (2-D) or 3-dimensional (3-D) simulated environments) desired by the user. Additionally, the systems and methods can detect multiple forms of input, synchronously or asynchronously, from a single or multiple users, during one or more creative sessions to facilitate a persistent AI assisted processing of user inputs to provide iterative creative proposals for individual or collaborative content creation. Accordingly, the systems and the methods of the present disclosure significantly improve content creation and collaborative interactions of one or more users in a computing environment by providing an intuitive and efficient process, as well as interfaces for enabling creative sessions powered by trained machine learning systems or modules in a nonconventional way.

The following embodiments describe systems and methods for enabling a plurality of users to, synchronously or asynchronously, co-create contents in computing environments (e.g., an augmented reality environment, a virtual reality environment, and 2-dimensional (2-D) or 3-dimensional (3-D) simulated environments) using artificial intelligence-based procedural technologies. According to aspects of the present disclosure, the systems and methods may facilitate capturing of input data from one or more users. The input data may include, but not limited thereto, audio data (e.g., voice, audio files, etc.), haptic data, text data, image data, video data, or any other type of data, synchronously or asynchronously. The systems and methods of the present disclosure may facilitate converting the data into text data, analyzing the data, cleaning the data, extracting prompts from the data, and converting the prompts into creative actions that has creative effects in the computing environment to generate creative works or contents. According to aspects of the present disclosure, the process for cleaning the data may include, for example, eliminating unnecessary data from text (e.g., eliminating duplicates and redundancies). The creative effects may be graphical, which may include translating one or more graphical images to change in shapes, forms, colors, brightness (e.g., adding or removing lights or intensity of light), dimensions, elements (e.g., furniture), etc., in a computing environment. Additionally or alternatively, the creative effects may be based on musical compositions, compositions of art pieces, textbooks, video game creations, architectural designs, book creations, articles manufacturing, and/or graphic designs (e.g., creation of virtual environments for companies).

The computing environment or specific areas of the computing environment may function similarly to a white canvas where the creative effects may be applied. Such creative effects may be provided on one or more of surfaces or spaces in real-time or close to real-time. Additionally, the systems and methods of the present disclosure may provide one or more creative proposals to the users of the computing environment, where each proposal may be directed to a specific user based on his or her specific input. Accordingly, the systems and methods of the present disclosure improves the way one or more users can create contents and interact with other users in a computing environment by utilizing one or more machine learning models.

The subject matter of the present description will now be described more fully hereinafter with reference to the accompanying drawings, which form a part thereof, and which show, by way of illustration, specific exemplary embodiments. An embodiment or implementation described herein as "exemplary" is not to be construed as preferred or advantageous, for example, over other embodiments or implementations; rather, it is intended to reflect or indicate that the embodiment(s) is/are "example" embodiment(s). Subject matter can be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of exemplary embodiments in whole or in part.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

In this disclosure, the term "based on" means "based at least in part on." The singular forms "a," "an," and "the" include plural referents unless the context dictates otherwise. The term "exemplary" is used in the sense of "example" rather than "ideal." The term "of is meant to be inclusive and means either, any, several, or all of the listed items. The terms "comprises," "comprising," "includes," "including," or other variations thereof, are intended to cover a non-exclusive inclusion such that a process, method, or product that comprises a list of elements does not necessarily include only those elements, but may include other elements not expressly listed or inherent to such a process, method, article, or apparatus. Relative terms, such as, "substantially" and "generally," are used to indicate a possible variation of ±10% of a stated or understood value.

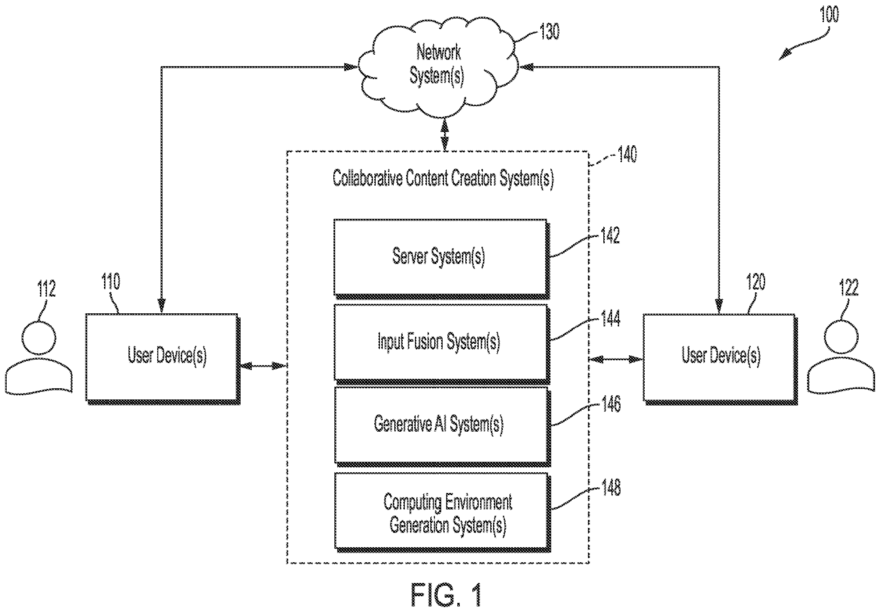

Referring now to the appended drawings, FIG. 1 shows an overview of an example environment (or system(s)) 100, according to one or more embodiments of the present disclosure. The environment 100 may include, for example, a first user device(s) 110 and a second user device(s) 120, which are configured to communicate with a network system(s) 130 and a collaborative content creation system(s) 140. Although two user device(s) 110 and 120 are shown in the environment 100, additional user devices may be provided in the environment 100 to communicate with the network system(s) 130 and/or collaborative content creation system(s) 140, synchronously or asynchronously, and to participate in the collaborative content creation of multiple users, in accordance with the present disclosure.

According to aspects of the present disclosure, the network system(s) 130 may define one or more networks including wired or wireless networks. The network system(s) 130 may include, for example, the Internet and/or one or more cloud networks. Further, the network system(s) 130 may include a public network, such as the Internet, a private network, such as an intranet, or combinations thereof, and may utilize a variety of networking protocols now available or later developed including, but not limited to TCP/IP based networking protocols. The network system(s) 130 may be configured to communicatively couple the user device(s) 110 and 120 to the collaborative content creation system(s) 140 to enable communication of data between the user device(s) 110 and 120 and the collaborative content creation system(s) 140. The network system(s) 130 may generally be enabled to employ any form of computer-readable or machine-readable media for communicating information from one device to another. The network system(s) 130 may include communication methods by which information may travel between computing devices. The network system(s) 130 may be regarded as a public or private network connection and may include, for example, a virtual private network or an encryption or other security mechanism employed over the public Internet, or the like.

In one embodiment, the user device(s) 110 and 120 may communicate directly with the collaborative content creation system(s) 140 or indirectly through the network system(s) 130 or other available communication channels. In the case the user device(s) 110 and 120 communicates directly with the collaborative content creation system(s) 140, the collaborative content creation system(s) 140 may be implemented and configured to facilitate communication via, for example, one or more communication methods described in reference to the network system(s) 130 above.

According to aspects of the present disclosure, the collaborative content creation system(s) 140 may include a server system(s) 142, an input fusion system(s) 144, a generative AI system(s) 146, and a computing environment generation system(s) 148. In some embodiments, the collaborative content creation system(s) 140 may be one or more servers that may be configured to perform some or all functions of the server system(s) 142, the input fusion system(s) 144, the generative AI system(s) 146, and the computing environment generation system(s) 148, according to aspects of the present disclosure. A system(s), in this disclosure, may include various implementations that can include a variety of electronic and computer systems. One or more implementations described herein may implement functions using two or more specific interconnected hardware modules or devices with related control and data signals that can be communicated between and through the modules, or as portions of an application-specific integrated circuit. Accordingly, the system(s) encompasses software, firmware, and 11 I arc \\, arc implementations.

According to aspects of the present disclosure, the server system(s) 142 may include one or more data servers or databases that may be located on a cloud server/network, an edge server/network, in the network system(s) 130, and/or on a location where the server system(s) 142 may be integrated directly or indirectly with the collaborative content creation system(s) 140. The server system(s) 142 may store and process data received from the user device(s) 110 and/or the network system(s) 130 to facilitate execution of collaborative content creation, in accordance with embodiments of the present disclosure. Additionally, the server system(s) 142 may receive and transmit data or command signals to and from the input fusions system(s) 144, generative AI system(s) 146, and the computing environment generation system(s) 148 to facilitate execution of collaborative content creation.

According to aspects of the present disclosure, the input fusion system(s) 144 may receive one or more inputs or commands from a first user 112 and a second user 122. As described above, the environment 100 may include more than two users or user devices. Accordingly, the input fusion system(s) 144 may receive inputs and commands from more than two users or user devices. Alternatively, the input fusion system(s) 144 may receive one or more inputs or commands from only the first user 112 or the second user 112 depending on the type of collaboration session. That is, the collaborative content creation system(s) 140 may facilitate a single user creation session or a multiple user creation session. In the present disclosure, the terms input and command may be used interchangeably. The user inputs or commands may include, for example, an audio input, a haptic input, a text input, an image input, gesture input, or a video input, but are not limited thereto. That is, any type of data that are acceptable, for example, via sensors or other suitable means connected to or integrated with the user devices in the environment 100, may be considered to be user inputs or commands in accordance with the present disclosure. The user commands may be direct or indirect commands. For example, a direct command may refer to commands that may be configured to instruct the collaborative content creation system(s) 140 to perform commands that are directly being input by one or more users (e.g., changing a specific color to a selected area). Conversely, indirect command may refer to commands that may be configured to instruct the collaborative content creation system(s) 140 to interpret and extract inferring the information from the commands, (e.g., what is being said by a user). For example, direct commands may require less learning, analysis, and interpretation by the collaborative content creation system(s) 140 because the users may simply select specific areas of creation and directly send the commands. However, indirect commands may require more training (e.g., a machine learning model training) as the collaborative content creation system(s) 140 tries to capture the data and extract clean commands that may be as close as possible to what is being interpreted by the AI or machine learning model. For example, indirect commands may be mostly used when one or more users have a dialogue in a creative session between themselves, where the users may be brainstorming about what they consider to be their creative work. Alternatively, a single user may speak in a creative session alone to brainstorm about what he or she may consider to be the creative work.

In one embodiment, the first user 112 and/or the second user 122 may input commands, synchronously or asynchronously, into the first user device(s) 110 and the second user device(s) 120, respectively. The input fusion system(s) 144 may receive, directly, or indirectly via the network system(s) 130 and/or server system(s) 142, the input commands from the user device(s) 110 and 120. The input fusion system(s) 144 may then transcribe or convert the input commands into text data. For the input commands that may be received in the form of text data, conversion to text data by the input fusion system(s) 144 may not be necessary. The input fusion system(s) 144 may then analyze the converted text data or received text data, depending on the type or form of the input commands, by capturing semantics of the text data (e.g., understanding the context of conversations), detecting duplicates and/or redundancies (e.g., unnecessary information), labeling the text data, and/or detecting prompts. The input fusion system(s) 144 may then clean or modify, if necessary, the analyzed text data by eliminating, for example, detected duplicates and/or redundancies. The input fusion system(s) 144 may then proceed to extract, if any, the prompts from the analyzed and cleaned text data. In some embodiments, the input fusion system(s) 144 may utilize a trained machine learning model. The input fusion system(s) 144 may then send the extracted, clean prompts to the generative AI system(s) 148. In some embodiments, the data conversion or transcription may take place on the user device(s) 110, 120. Accordingly, the user device(s) 110, 120 may implement computer code that enables conversion of audio or other types of data into text and send the transcribed text to the collaborative content creation system(s) 140. Alternatively, as described above, the data transcription or conversion may take place in the collaborative content creation system(s) 140 by the input fusion system(s) 142 so that the input device(s) 110, 120 may not need to perform any data transcription or conversion. Alternatively, all of the functions of the input fusion system(s) 142 may be performed by the generative AI system(s) 146, including the text transcription or conversion, input, or command data analyses, and/or input or command data cleaning.

In one embodiment, a labeling process may be performed by the input fusion system(s) 144 on any type of input or command data, such as image data, haptic data, video data, audio data and/or other types of data. For data that does not include text data, the labeling process can be considered as a type of transcription of commands into text. For example, if a picture provided by a user (e.g., users 112, 122) including a moon in the space is received by the input fusion system(s) 144, the input fusion system(s) 144 may generate labels including, for example, moon, shiny, white, dark space, etc. that can be converted into actual prompts and creative works. As another example, in a music creation session, where a performance of classical music is uploaded, the input fusion system(s) 144 may generate labels including, for example, harmonious, classical, soft music, etc. that can be converted into actual prompts and creative works. For data that is received in text, instead of performing the above-described labeling process, a categorization process may be performed similarly. For example, if text data including a moon in space is received by the input fusion system(s) 144, the input fusion system(s) 144 may categorize the text data with, for example, moon, shiny, white, dark space, etc. In one embodiment, the input fusion system(s) 144 may receive both text and non-text data synchronously from one or more users. In this embodiment, the input fusion system(s) 144 may perform both transcription and categorization concurrently or sequentially. In one example the labeling or categorization process includes adding text that identifies the author (e.g., user 112 or 122) of the received input. Such an identification may be performed by one or more of recognizing the user device of the corresponding user, or recognizing the user voice, or the user image (e.g., through face recognition), and/or the like. Additionally, the input fusion system(s) 144 may compare the information analyzed from the text data with the information analyzed from the non-text data to generate labels or categories that can be converted into actual prompts and creative works. For example, one or more labels identified from non-text data and one or more categorizations identified from the text data may be processed together by the input fusion system(s) 144 to convert to prompts and creative works. The conversion and the categorization processes described above may be performed together simultaneously or sequentially.

According to aspects of the present disclosure, the generative AI system(s) 148 may receive one or more prompts from the input fusion system(s) 144. In one embodiment, the generative AI system(s) 148 may generate one or more of creative proposals based on the one or more prompts received from the input fusion system(s) 144. Each proposal may relate to a specific user based on his or her specific input. For example, if the first user 112 sends a command for modifying the color of the walls to red and the second user 122 sends a command for modifying the color of the walls to blue, the generative AI system(s) 148 may recognize the differences in the commands based on the prompts received from the input fusion system(s) 144. The generative AI system(s) 146 may then label the first command as that of the first user 112 and the second command as that of the second user 122. The generative AI system(s) 146 may then proceed to prepare a first proposal corresponding to the first user 112, and a second proposal corresponding to the second user 122. Of course, the same or similar process or method for preparing the proposals may be applied to various other types of user commands (e.g., image, text, haptic, etc.). The generative AI system(s) 146 may then transmit the proposals to the computing environment generation system(s) 148.

In one embodiment, the generative AI system(s) 146 may include one or more generative AI models that may utilize input data received from the input fusion system(s) 144 and generate output data that may be used to facilitate the functions of the generative AI system(s) 146. The generative AI models may include, for example, a combination of various AI algorithms used to represent and process content. Further, for generating one or more creative proposals, the generative AI models may utilize natural language processing techniques to generate text, transforming raw characters such as letters, punctuation, and words into sentences, parts of speech, entities, and actions, which may then be represented as vectors using multiple encoding techniques. Additionally, images may be transformed into various visual elements, also expressed as vectors, to be used as one or more creative proposals by the generative AI system(s) 146. In one embodiment, a specific neural network may be used to generate new content in response to a query or prompt. Techniques such as Generative Adversarial Networks (GANs) and Variational Autoencoders (VAEs) may be utilized for generating one or more of creative proposals by the generative AI system(s) 146.In one embodiment, the AI algorithms of the present disclosure may be trained with a predetermine number of datasets prior to the application of the AI algorithms in the AI system(s) 146. Additionally, the AI algorithms may continue learning during the creative sessions performed in the environment 100. For example, the AI system(s) 146 may learn from each user's creative style after each creative session. The AI system(s) 146 may then improve the AI algorithms through machine learning so that the AI system(s) 146 may generate and provide creative proposals faster and/or with better quality.

According to aspects of the present disclosure, the computing environment generation system(s) 148 may facilitate generation of one or more computing environments that the users 112, 122 in the environment 100 may utilize to collaborate for creating contents. The computing environments may include, for example, an augmented reality environment, a virtual reality environment, and 2-dimensional (2-D) or 3-dimensional (3-D) simulated environments, but are not limited thereto. Examples of the computing environments and user collaborations in the computing embodiments are also disclosed in co-pending U.S. Patent Application No. 17/006,327, the entire disclosure of which, except for any disclaimers, disavowals, and inconsistencies, is incorporated herein by reference. Further, any of the machine learning algorithms disclosed in the co-pending application may be incorporated to be used individually or in combination with the machine learning models used by the input fusion system(s) 144 and/or the generative AI system(s) 148.

In one embodiment, the computing environment generation system(s) 148 may facilitate the generation of the one or more computing environments in an area of an already existing virtual environment.

In one embodiment, the computing environment generation system(s) 148 may receive, for example, user commands, prompts and/or proposals from the user device(s) 110 and 120, input fusion system(s) 144, and/or generative AI system(s) 146. The computing environment generation system(s) 148 may then generate graphical and/or audio interfaces where users of the environment 100 may utilize to interact with each other for creating contents. For example, the computing environment generation system(s) 148 may generate one or more elements in a virtual environment through one or more user graphical representations (UGRs) or audio representations. These UGRs or audio representations may be created from real-time camera or microphone feed captured by one or more cameras or microphones, e.g., cameras or microphones integrated with the user devices (e.g., user device(s) 110, 120) or cameras or microphones that are separate from but electrically connected to the user devices. The UGRs may aid the users to collaborate with each other to create contents in the virtual environment. For example, when the first user 122 makes a movement, which may be detected by the user device(s) 110, a UGR associated with the first user 112 in a virtual world may move or create one or more effects based on the movement made by the first user 112. Similarly, when the second user 122 makes a movement, which may be detected by the user device(s) 120, another UGR associated with the second user 122 may move or create one or more effects based on the movement made by the second user 122. The input fusion system(s) 144, and/or generative AI system(s) 146 may utilize one or more machine learning models to clean, analyze, and/or extract prompts to provide proposals to the first user 112 and/or the second user 122 based on the movements made by the first user 112 and the second user 122. Accordingly, the collaborative content creation system(s) 140 may facilitate execution of collaborative content creation using artificial intelligence to enable multiple users to co-create contents in a computing environment.

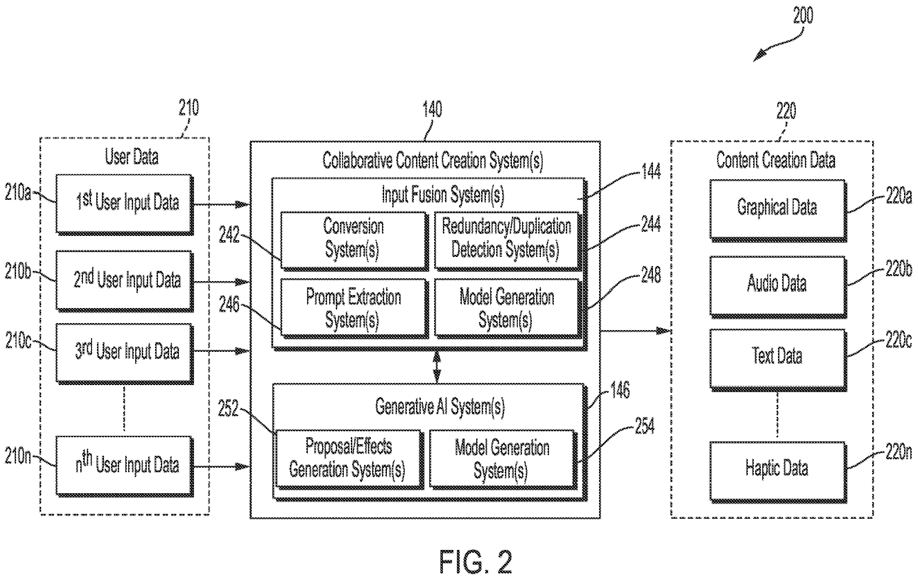

FIG. 2 depicts a block diagram of an exemplary system 200 for generating content creation data 210 according to embodiments of the present disclosure. The collaborative content creation system(s) 140 of the environment 100 shown in FIG. 1 may receive user data 210 from one or more users. In this embodiment, the collaboration content creation system(s) 140 is shown with only the input fusion system(s) 144 and the generative AI system(s) 146 for clarity of illustration and explanation. However, the collaborative contention creation system(s) 140 may include all or some of the system(s) shown in FIG. 1.

Still referring to FIG. 2, the user data 210 may be generated by one or more user devices (e.g., user device(s) 110, 120) when one or more users provide inputs or commands to the user devices. The user devices may generate 1' to nt^{h} user input data 210a-210n, synchronously or asynchronously. That is, when more than two users provide inputs or commands substantially at the same time, the user input data 210a-210n may be said to be generated synchronously. Conversely, when two or more users do not provide inputs or commands substantially at the same time, the user input data 210a-210n may be said to be generated asynchronously. Accordingly, when two or more of the user input data 210a-210n are sent synchronously to the collaborative content creation system(s) 140, said two or more input data 210a-210n may overlap with each other, and vice versa. As described above in reference to FIG. 1, the user data 210 may be sent directly to the collaborative content creation system(s) 140 or indirectly via the network system(s) 130.

In one embodiment, the user data 210 may include any of audio data (e.g., voice, audio files, etc.), haptic data, text data, image data, video data, or any other type of data, individually or in combination, which may be captured or sensed by one or more sensors communicatively connected to the user devices (e.g., user device(s) 110, 120). Alternatively or additionally, the user data 210 may be input directly by one or more users (e.g., by manually typing commands or uploading text files). For example, in the case of inputting audio data, the audio data may be captured or sensed by one or more microphones of the client device. Alternatively, the audio data may be uploaded directly by a user, for example, as an audio file including pre-recorded music and/or voice. In another example, the input data may be an image file uploaded through the user device or captured by a camera of the user to be transmitted to the collaborative content creation system(s) 140. The audio and/or image file may be analyzed by the input fusion system(s) 144 to extract any prompts in the audio and/or image data thereof. For haptic data, a user may manually touch one or more surfaces on an input device, an augmented environment, or a virtual environment. For example, a user may make an input selection by touching or clicking, physically or virtually, one or more surfaces to be modified or manipulated. In one embodiment, one or more users may paint specific areas in a computing environment for creating contents (e.g., painting brushstrokes as 2D lines or 3D curves that can define a specific area for creation or refinement).

Still referring to FIG. 2, the collaborative content creation system(s) 140 may include a conversion system(s) 242, redundancy/duplication detection system(s) 244, prompt extraction system(s) 246, and a model generation system(s) 248. In one embodiment, upon receiving the user data 210 from a plurality of users or input devices, the input fusion system(s) 144 may perform data cleaning on the user data 210 using one or more machine learning models. As described in the foregoing embodiments, the user data 210 may be converted into text data by the conversion system(s) 242, depending on the form or type of information that was provided by the users. In one embodiment, the conversion system(s) 242 may detect whether there are any commands in the user data 210 that were sent by two or more input devices at substantially the same time. Upon detecting receipt of the user commands at substantially the same time, the redundancy/duplication detection system(s) 244 may clean relevant information (e.g., text or non-text information) in the input data 210 in a manner that is simple and efficient for an AI model (e.g., machine learning model) to understand or process. For example, the cleaning of the input information may be performed based on uploaded modalities corresponding to a machine learning model. The machine learning model may be generated and/or trained by the model generation system(s) 248. If there are confusing or unrecognizable (or non-understandable) commands (e.g., because an overlap of commands may produce unclear data or because of noise that may disrupt the flow of the commands), the redundancy/duplication detection system(s) 242 may flag those data bits as unclear and send one or more clarifying messages to the users to obtain clarity for the specific commands or messages. The AI model utilized by the input fusions system(s) 144 may be generated by one or more model generation system(s) 248.

In one embodiment, the model generation system(s) 248 may generate and/or train one or more of AI models (e.g., machine learning models). The model generation system(s) 248 may reside in the input fusion system(s) 144 integrated as part of the input fusion system(s) 144. Alternatively, the model generation system(s) 248 may be located in the network system(s) 130, on a cloud server/network, or an edge server/network, but is not limited thereto. The model generation system(s) 248 may be a machine learning platform that may generate a library of components to generate machine learning models and machine learning applications. The model generation system(s) 248 may allow a user to generate machine learning applications without having detailed knowledge of the cloud-based network infrastructure or knowledge of how to generate code for building the model. The model generation system(s) 248 may analyze the identified data and the user provided desired prediction and performance characteristics to select one or more library components and associated Application Programming Interfaces (APIs) to generate a machine learning application or model. The machine learning techniques can monitor and evaluate the outputs of the machine learning model to allow for feedback and adjustments to the model. The machine learning application or model can be trained, tested, and compiled for export as stand-alone executable code. For example, the model generation system(s) 248 may utilize one or more large language models (LLMs) and/or machine learning models utilized for executing Outpainting. In one embodiment, the model generation system(s) 248 may generate and store one or more library components that can be used for other machine learning applications, models and/or systems (e.g., generative AI system(s) 146). The model generation system(s) 248 may generate a profile which allows the input fusion system(s) 144 to make recommendations based on, for example, a user's historical preferences. The generation system(s) 248 may detect the number and type of infrastructure resources necessary to achieve the desired results within the desired performance criteria.

In one embodiment, a single machine learning model generated by the model generation system(s) 248 may be utilized by the conversion system(s) 242, the redundancy/duplication detection system(s) 244, and the prompt extraction system(s) 246 simultaneously or sequentially. Alternatively, multiple machine learning models generated by the model generation system(s) 248 may be utilized by the conversion system(s) 242, the redundancy/duplication detection system(s) 244, and the prompt extraction system(s) 246 simultaneously or sequentially. Accordingly, the input fusions system(s) 144 may facilitate synchronous or asynchronous creative sessions in a computing environment by one or more users. Unlike the conventional AI platforms that generally require a single command or request to be processed by an AI model in a unilateral manner, the systems and methods of the present disclosure facilitates the processing of multiple synchronous or asynchronous inputs provided by one or more users. For example, one or more users who participate in content creation in a computing environment may provide inputs synchronously or asynchronously. The collaborative content creation system(s) 140 may process all of the inputs synchronously or asynchronously in a persistent manner. Accordingly, the collaborative contention creation system(s) 140 provided, based on one or more machine learning models, creative effects and/or proposals before, during, and/or after the inputs have been provided by one or more users in one or more creative sessions.

Still referring to FIG. 2, the redundancy/duplication detection system(s) 144 may detect one or more redundancies (e.g., unnecessary information) and/or duplicates in the user data 210. For example, the redundancy/duplication detection system(s) 144 may detect words and prompts that are repeated in the user data 210 so that only the information associated with contents that add value to the creative work of a single user or between multiple users in a computing environment is remaining. For example, if there are three users having a creative dialogue or conversation and two of the users say the same thing, the redundancy/duplication detection system(s) 244 may detect, for example, by utilizing the machine learning model(s) generated by the model generation system(s) 248, the redundancy and/or duplicates and allow the prompt extraction system(s) 246 to extract only the prompts that add value to the creative work. In one embodiment, the detection of redundancies and/or duplicates may be performed before or after the cleaning process described in the foregoing embodiments has taken place. Additionally, if some of the users use filler words, repeat sentences, or make sounds that do not add value to the creative work between multiple users in the computing environment, the redundancy/duplication detection system(s) 144 may proceed to discard the redundancies and/or duplicates in the user data 210 before extracting, by the prompt extraction system(s) 246, any prompts that may be present in the user data 210. In this manner, the generative AI system(s) 146 may only receive the commands that are useful for the creative session, thereby increasing efficiency and accuracy of determining creative effects and proposals based on the user inputs.

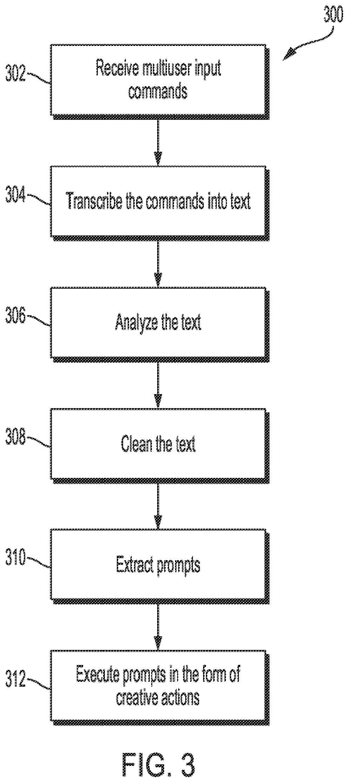

Still referring to FIG. 2, the generative AI system(s) 146 may include a proposal/effects generation system(s) 252 and a model generation system(s) 254. The proposal/effects generation system(s) 252 may generate content creation data 220 for producing creative effects in a computing environment (e.g., an augmented reality environment, a virtual reality environment, and 2-dimensional (2D) or 3-dimensional (3D) simulated environments, etc.). FIG. 3 shows an example virtual environment that may facilitate the functions of the systems and methods of the embodiments described in reference to FIGS. 1 and 2. The features of FIG. 2 will now be described in combination with the virtual environment 300 in FIG. 3 to aid the understanding of the features of collaborative content creation, in accordance with embodiments of the present disclosure. Of course, any computing environment (e.g., an augmented reality environment, a virtual reality environment, and 2-dimensional (2D) or 3-dimensional (3D) simulated environments, etc.) may be applicable to facilitate the collaborative content creation, in accordance with embodiments of the present disclosure.

In one embodiment, the virtual environment 300 may be generated by a computing environment generation system (e.g., the computing environment generation system(s) 148) in accordance with the content creation data 220 generated by the generative AI system(s) 146. For brevity, details of generating the virtual environment 300 is omitted. Detailed explanation of generating computing environments (e.g., an augmented reality environment, a virtual reality environment, and 2-dimensional (2D) or 3-dimensional (3D) simulated environments, etc.) is provided in a co-pending U.S. Patent Application No. 17/006,327, which is incorporated herein by reference in its entirety. The virtual environment 300 may include a first user graphical representations (UGR) 302, a second UGR 304, and a third UGR 306. The UGRs 302-306 may be generated based on data or signals received from one or more cameras capturing the images of first, second, and third users. The UGRs 302-306 may be generated based on an image removal process that removes the background images, which may allow only the image representing the user to be inserted into the virtual environment 300.

In one embodiment, the virtual environment 300 may include a space (or surface) 310. The space 310 may be provided to facilitate collaborative content creation by one or more users. That is, one or more users, for example, via the UGRs 302-306, may perform creative actions on the space 310. For example, an element 308 may be created or modified by the UGRs 302-306. In one embodiment, the space may be a creative space in a virtual environment. However, the creative space may also be a selected area, space, or object of the virtual environment. For example, the creative space may be a wall, an actual art canvas (for art painting), a city model, an article of manufacture, a book, etc., where all the commands may be sent and processed for that selected area, space, or object. Although a table is shown in FIG. 3, any space or surface may be utilized to facilitate collaborative content creation, in accordance with embodiments of the present disclosure. For example, a "white canvas" may be provided in the virtual environment 300 to allow multiples users to collaborate and create the element 308 (e.g., drawings, paintings, writings, etc.). Accordingly, the collaborative content creation system(s) 140 facilitates or enables creative sessions to take place in a natural way through conversation and/or through other means in such a way that the creative changes are seen in real or almost real-time on the spaces and surfaces (e.g., space 310) of the virtual environment 300.2

Referring back to FIG. 2, the content creation data 220 generated by the generative AI system(s) 146 may include graphical data 220a, audio data 220b, text data 220c, and haptic data 220n, but is not limited thereto. For example, the content creation data 220 may include information or signals for providing creative effects in the virtual environment 300 in FIG. 3. In one embodiment, the content creation data 220 may facilitate changes to the element 308 in the virtual environment 300. The changes to the element 308 may include changing the shapes, forms, colors, brightness (e.g., adding or removing lights or intensity of light), dimensions, etc. of the element 308. Additionally, the element 308 may be an object (e.g., furniture, buildings, vehicle, etc.) in the virtual environment 300. Further, the element 308 may be expressed as musical compositions, compositions of art pieces, textbooks, or articles of manufacture, but is not limited thereto.

Still referring to FIG. 2, the proposal/effects generation system(s) 252 may generate one or more creative proposals to the users, where each proposal may belong to a specific user based on his or her specific input. For example, the proposal/effects generation system(s) 252 may label the input commands received from multiple users based on each user that provides or sends a specific input command. For example, if User A (e.g., first user 112) sends a command for modifying the color of a wall in a computing environment (e.g., an augmented reality environment, a virtual reality environment, and 2-dimensional (2-D) or 3-dimensional (3-D) simulated environments) to red, and User B (e.g., second user 122) sends a command for modifying the color of the walls to blue, the proposal/effects generation system(s) 252 may recognize the two separate commands. The proposal/effects generation system(s) 252 may then label the first command as that of User A and the second command as that of User B and may generate one or more proposals corresponding to User A and different proposals corresponding to User B. Of course, this process may be applied similarly to other types of commands (e.g., image, text, haptic, etc.).

In one embodiment, the proposal/effects generation system(s) 252 may generate content creation data 220 for facilitating one or more creative effects on one or more surfaces or spaces (e.g., space 310) of the computing environment (e.g., an augmented reality environment, a virtual reality environment, and 2-dimensional (2-D) or 3-dimensional (3-D) simulated environments). In this embodiment, the proposal/effects generation system(s) 252 may continuously refine the creative works as additional data is received from the users of the computing environment. That is, the proposal/effects generation system(s) 252 may persistently analyze the user input data to generate creative effects and proposals based on contextual iterations. For example, after the proposal/effects generation system(s) 252 has generated data or signals (e.g., content creation data 220) for providing creative effects in a computing environment that includes all or most of the features based on the commands sent by the users, the generative AI system(s) 146 may review and continuously further refine the current creative contents as the users continue the creative session. Further, the users may also select specific areas for creating and refining creative contents. For example, the users may select by clicking, touching, painting brushstrokes as 2D lines or 3D curves (e.g., for defining a specific area for creation or refinement), texting or speaking to specific areas, objects, volumes, or spaces of the virtual environment 300 and may thereafter send their commands. In some embodiments, the generative AI system(s) 146 may, after a creative session is over, apply embellishment techniques independently, based on persistent iterations. The embellishment techniques may include, for example, improving colors, contrast, sharpness, brightness, smoothening surfaces, applying occlusion, or other refinement techniques to the finalized or semi-finalized creative works. Likewise, for audio creation, the embellishment techniques may include noise reduction, volume increase, tone enhancement, etc.

In one embodiment, the generative AI system(s) 146 may be configured to facilitate real-time creative sessions where the creative works are performed as one or more users speak. However, in some embodiments, if the desired creative work requires further processing, the generative AI system(s) 146 may notify users of the estimated time of completion and may proceed to take the necessary time, either online or offline. For example, when a user ends a creative session, the user may receive a notification later indicating that the collaborative content creation system(s) 140 has finished the creative work and the users can access the completed creation for review and/or modification. Accordingly, the systems and methods of the present disclosure significantly improves content creation and collaborative interactions of one or more users in a computing environment by utilizing the input fusion system(s) 144 and generative AI system(s) 146 to execute synchronous or asynchronous processing of user inputs through persistent, contextual iterations to generate creative proposals and effects before, during, and after the creative collaborative sessions.

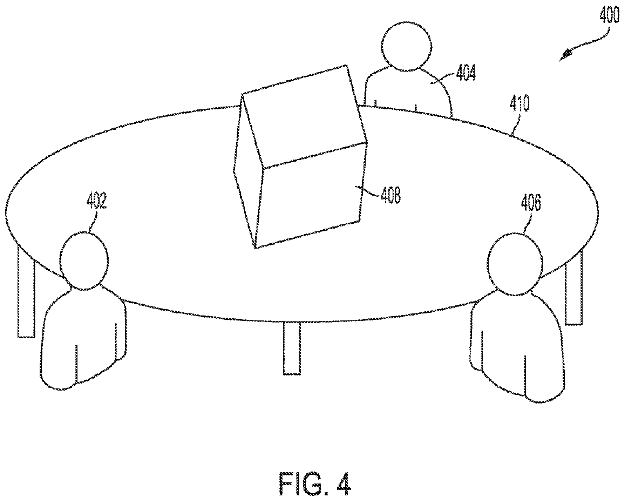

FIG. 4 depicts a flowchart of an exemplary method 400 for executing collaborative content creation using artificial intelligence in a computing environment (e.g., an augmented reality environment, a virtual reality environment, and 2-dimensional (2-D) or 3-dimensional (3-D) simulated environments) according to the foregoing embodiments described in reference to FIGS. 1-3. At step 402, a collaborative content creation system (e.g., collaborative content creation system(s) 140) may receive multiuser input commands from multiple users (e.g., users 112, 122). The collaborative content creation system may utilize one or more system(s) and/or modules described in reference to FIGS. 1-3 to facilitate the method 400 shown in FIG. 4. At step 404, the collaborative content creation system may transcribe the multiuser input commands into text. For example, the collaborative content creation system may convert input commands into text for commands that are not provided in the form of text. These commands may be, for example, in the form of an audio input, a haptic input, an image input, gesture input, or a video input, but are not limited thereto. At step 406, the collaborative content creation system may analyze the converted text to detect redundancies and duplicates, detect prompts, and/or perform labeling of the text data, in accordance with the foregoing embodiments in reference to FIGS. 1-3. At step 408, the collaborative content creation system may clean the analyzed and converted text. That is, if any redundancies and duplicates have been detected in the converted text, the collaborative content creation system may remove the detected redundancies and duplicates from the converted text. Further, if necessary, labeling may be performed by the collaborative content creation system based on the form of the input commands converted into text. At step 410, the collaborative content creation system may extract one or more prompts from the cleaned and converted text. The prompts may include information or data for facilitating application of creative effects in a computing environment. The computing environment may be any computing environment (e.g., an augmented reality environment, a virtual reality environment, and 2-dimensional (2-D) or 3-dimensional (3-D) simulated environments) disclosed in connection with the foregoing embodiments of the present disclosure. At step 412, the collaborative content creation system may execute the prompts in the form of creative actions or effects in the computing environment. In one embodiment, one or more machine learning models may be utilized at steps 404-412 to facilitate the collaborative content creation by multiple users in a computing worlds, in accordance with embodiments of the present disclosure.

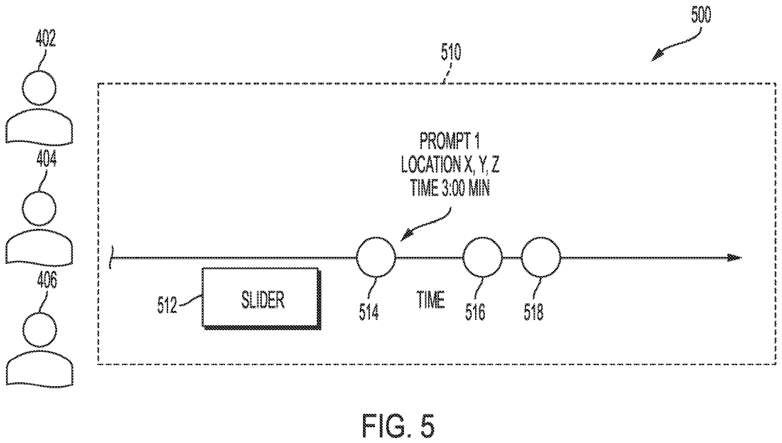

FIG. 5 depicts an exemplary user interface 500 for executing collaborative contention creation using artificial intelligence in a computing environment, according to aspects of the present disclosure. The user interface 500 may be provided in any of the computing environments (e.g., an augmented reality environment, a virtual reality environment, and 2-dimensional (2-D) or 3-dimensional (3-D) simulated environments) described in reference to FIGS. 1-4. In one embodiment, the user interface 500 may be generated by the computing environment generation system(s) 148 based on data received from the input fusion system(s) 144 and/or generative AI system(s) 146. The user interface 500 may be configured to be operated or manipulated by a plurality of users 502, 504, 506. One or more of the users 502, 504, 506 may operate a slider 512 on a timeline in the user interface 510, as shown in FIG. 5. In some embodiments, buttons, keys, or other appropriate graphical or audio elements may be utilized instead of the slider 512. The timeline may include one or more time locations 514, 516, 518, where a user may position the slider 512 back and forth on the timeline to review or modify creative effects that have been made at a particular time period. For example, the time location 514 may define a prompt (e.g., Prompt 1) that is associated with a location (e.g., X, Y, Z coordinates) at a time period (e.g., 3:00 Min.). In one embodiment, the computing environment generation system(s) 148 may generate one or more prompts that are associated with the selected time location (e.g., 514, 516, or 518). The user (502, 504, and/or 506) may then select the prompts, for example, by clicking on the prompts that may be provided as a graphical element in the computing environment. Accordingly, the collaborative content creation system(s) 140 may enable the users of the computing environment to slide the timeline back and forth and clicking on the prompts or commands to perform persistent iterative functions to facilitate additional content creation or modification.

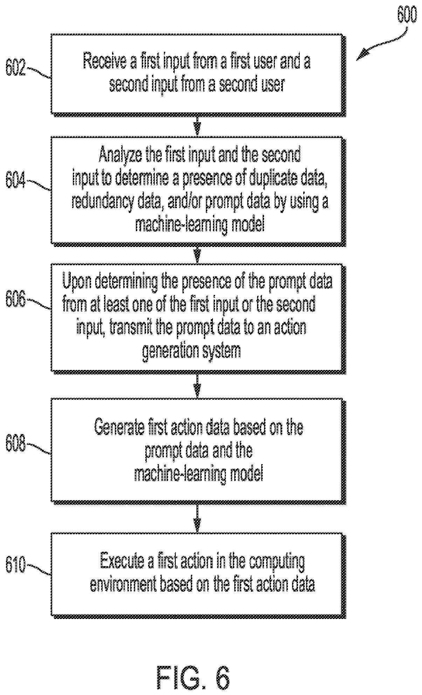

FIG. 6 depicts a flowchart of another exemplary method 600 for executing collaborative content creation in a computing environment using artificial intelligence, according to aspects of the present disclosure. In particular, the method 600 may be performed according to the embodiments described in reference to FIGS. 1-5. For example, the method 600 may be performed by one or more systems in the environment 100 and the system 200. Further, the method 600 may be performed in the virtual environment 300 and utilize the user interface 500. At step 602, a content creation system may receive a first input from a first user and a second input from a second user. The content creation system may be the collaborative content creation system(s) 140 shown in FIGS. 1 and 2. In one embodiment, the first user may be the first user 112, and the second user may be the second user 122 shown in FIG. 1. Alternative, the first and second users may be any of the users 502, 504, 506 shown in FIG. 5 or any users represented by the UGRs 302, 304, 306 shown in FIG. 3. The first input or the second input may include the user data 210 shown in FIG. 2. For example, the first input may be the 1s^{t} user input data 210a and the second input may be the second user input data 210b shown in FIG. 2. Each of the first and second inputs may include, for example, audio data (e.g., voice, audio files, etc.), haptic data, text data, image data, video data, or any other type of data. In one embodiment, the first input and the second input may be received synchronously or asynchronously.

At step 604, an input fusion system may analyze the first input and the second input to a presence of duplicate data, redundancy data, and/or prompt data by using a machine learning model. The input fusion system may be the input fusion system(s) 144 shown in FIGS. 1 and 2. The machine learning model may be generated from the model generation system(s) 248 or the model generation system(s) 258. In one embodiment, the machine learning model may facilitate determining the presence of duplicate data, redundancy data, and/or prompt data based on a direct user input or an indirect user input. In one embodiment the input fusion system may convert at least one of the first input or the second input into converted data. In this embodiment, at least one of the first input or the second input may include at least one of image data, audio data, or haptic data. Further, the converted data may include converted text data. In one embodiment, upon determining the presence of duplicate data or redundancy data, the input fusion system may eliminate the at least one of duplicate data or redundancy data from at least one of the first input or the second input. In one embodiment, upon determining the presence of duplicate data or redundancy data, the input fusion system may remove text data corresponding to the at least one of duplicate data or redundancy data from the converted text data.

At step 606, upon determining the presence of the prompt data from at least one of the first input or the second input, the input fusion system may transmit the prompt data to an action generation system. The action generation system may be the generative AI system(s) 146 in FIGS. 1 and 2.

At step 608, the action generation system may generate first action data based on the prompt data and the machine learning model. Alternatively, the first action data may be generated based on a second machine learning model. In one embodiment, the second machine learning model may be generated by the model generation system(s) 254 or the model generation system(s) 248.

At step 610, the action generation system may execute a first action in the computing environment based on the fast action data. In one embodiment, the computing environment may be at least one of a virtual environment or an augmented environment. Alternatively, the computing environment may be an augmented reality environment, a virtual reality environment, and 2-dimensional (2D) or 3-dimensional (3D) simulated environments, but is not limited thereto. In one embodiment, the first action may create or modify an element in a space of the at least one of the virtual environment or the augmented environment. Further, the element may be at least one of a visual element or an audio element. In one embodiment, the content creation system may generate a signal for displaying a graphical interface to the first user or the second user. The graphical interface may be the user interface 500. Further, the content creation system may receive a selection command from the first user or the second user. In one embodiment, the selection command may be sliding the slider 512 or clicking a graphical element associated with a prompt. Furthermore, the content creation system may provide a user created element in the computing environment based on the selection command. In one embodiment, the graphical controller is an adjustable timeline. In one embodiment, the selection command may select a time period on the adjustable timeline. In one embodiment, the user created element may be selected by the content creation system based on the time period.

In general, any process discussed in this disclosure that is understood to be computer-implementable, such as the processes shown in FIGS. 4 and 6 and the systems and/or interfaces described in connection with FIGS. 1-3 and 5, may be performed or otherwise implemented by one or more processors of a computer system, such as the user device(s) 110, 120, collaborative content creation system(s) 140, server system(s) 142, input fusion system(s) 144, generative AI system(s) 146, and computing environment generation system(s) 148, as described above. A process or process step performed by one or more processors may also be referred to as an operation. The one or more processors may be configured to perform such processes by having access to instructions (e.g., software or computer-readable code) that, when executed by the one or more processors, cause the one or more processors to perform the processes. The instructions may be stored in a memory of the computer system. A processor may be a central processing unit (CPU), a graphics processing unit (GPU), or another type of processing unit.

A computer system, such as the user device(s) 110, 120, collaborative content creation system(s) 140, server system(s) 142, input fusion system(s) 144, generative AI system(s) 146, and computing environment generation system(s) 148, or any other system performing operation to facilitate collaborative content creation in a computing environment, may include one or more computing devices. If the one or more processors of the computer system are implemented as a plurality of processors, the plurality of processors may be included in a single computing device or distributed among a plurality of computing devices. If a computer system comprises a plurality of computing devices, the memory of the computer system may include the respective memory of each computing device of the plurality of computing devices.

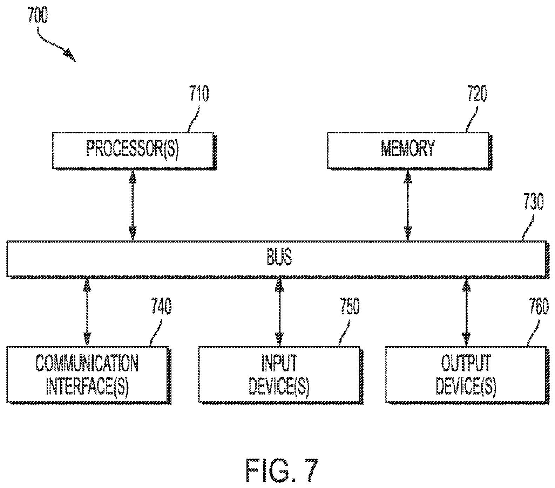

FIG. 7 illustrates an example of a computing device 700 of a computer system. The computing device 700 may include processor(s) 710 (e.g., CPU, GPU, or other processing unit), a memory 720, and communication interface(s) 740 (e.g., a network interface) to communicate with other devices. Memory 720 may include volatile memory, such as RAM, and/or non-volatile memory, such as ROM and storage media. Examples of storage media include solid-state storage media (e.g., solid state drives and/or removable flash memory), optical storage media (e.g., optical discs), and/or magnetic storage media (e.g., hard disk drives). The aforementioned instructions (e.g., software or computer-readable code) may be stored in any volatile and/or non-volatile memory component of memory 720. The computing device 700 may, in some embodiments, further include input device(s) 750 (e.g., a keyboard, mouse, joystick, controller, or touchscreen) and output device(s) 760 (e.g., a display, head-up display, AR display, VR display, printer). For example, if the user device(s) 110, 120 may be embodied as a tablet computer, the user device(s) 110, 120 may have a touchscreen and a display. The aforementioned elements of the computing device 700 may be connected to one another through a bus 730, which represents one or more busses. In some embodiments, the processor(s) 710 of the computing device 700 includes both a CPU and a GPU.

Instructions executable by one or more processors may be stored on a non-transitory computer-readable medium. Therefore, whenever a computer-implemented method is described in this disclosure, this disclosure shall also be understood as describing a non-transitory computer-readable medium storing instructions that, when executed by one or more processors, configure and/or cause the one or more processors to perform the computer-implemented method. Examples of non-transitory computer-readable medium include RAM, ROM, solid-state storage media (e.g., solid state drives), optical storage media (e.g., optical discs), and magnetic storage media (e.g., hard disk drives). A non-transitory computer-readable medium may be part of the memory of a computer system or separate from any computer system.

It should be appreciated that in the above description of exemplary embodiments, various features are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this disclosure.

Furthermore, while some embodiments described herein include some, but not other features included in other embodiments, combinations of features of different embodiments are meant to be within the scope of the disclosure, and form different embodiments, as would be understood by those skilled in the art. For example, in the following claims, any of the claimed embodiments can be used in any combination.

Thus, while certain embodiments have been described, those skilled in the art will recognize that other and further modifications may be made thereto without departing from the spirit of the disclosure, and it is intended to claim all such changes and modifications as falling within the scope of the disclosure. For example, functionality may be added or deleted from the block diagrams and operations may be interchanged among functional blocks. Steps may be added or deleted to methods described within the scope of the present disclosure.

The above disclosed subject matter is to be considered illustrative, and not restrictive, and the appended claims are intended to cover all such modifications, enhancements, and other implementations, which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description. While various implementations of the disclosure have been described, it will be apparent to those of ordinary skill in the art that many more implementations and implementations are possible within the scope of the disclosure. Accordingly, the disclosure is not to be restricted.

Aspects of the disclosure are set out in the following numbered clauses:
Clause 1. A method for executing collaborative content creation in a computing
   environment using artificial intelligence, the method comprising:
   receiving, by a content creation system, a first input from a first user and a second input from a second user,
   analyzing, by an input fusion system, the first input and the second input to determine a presence of duplicate data, redundancy data, and/or prompt data by using a machine learning model,
   upon determining the presence of the prompt data from at least one of the first input or the second input, transmitting, by the input fusion system, the prompt data to an action generation system,
   generating, by the action generation system, first action data based on the prompt data and the machine learning model; and
   executing, by the action generation system, a first action in the computing environment based on the first action data.
Clause 2. The method of clause 1, further comprising, upon determining the presence of the duplicate data in at least one of the first input or the second input, removing, by the input fusion system, the duplicate data from at least one of the first input or the second input.
Clause 3. The method of clause 1, further comprising, upon determining the presence of the duplicate data and the redundancy data in at least one of the first input or the second input, removing, by the input fusion system, the duplicate data and the redundancy data from at least one of the first input or the second input.
Clause 4. The method of clause 1, wherein at least one of the first input or the second input comprises text data.
Clause 5. The method of clause 1, further comprising converting, by the input fusion system, at least one of the first input or the second input into converted data,
   wherein at least one of the first input or the second input comprises at least one of image data, audio data, or haptic data, and wherein the converted data comprises converted text data.
Clause 6. The method of clause 5, further comprising, upon determining the presence of the duplicate data or the redundancy data, removing, by the input fusion system, text data corresponding to at least one of the duplicate data or the redundancy data from the converted text data.
Clause 7. The method of clause 1, wherein the machine learning model facilitates determining the presence of the duplicate data, the redundancy data, and/or the prompt data based on a direct user input or an indirect user input.
Clause 8. The method of clause 1. wherein the computing environment is a virtual environment.
Clause 9. The method of clause 1, wherein the computing environment is an augmented environment.
Clause 10. The method of clause 8, wherein the first action is creating or modifying an element in a space of the virtual environment.
Clause 11. The method of clause 10, wherein the element is at least one of a visual element or an audio element.
Clause 12. The method of clause 1. wherein the first input and the second input are received synchronously.
Clause 13. The method of clause 1, wherein the first input and the second input are received asynchronously.
Clause 14. The method of clause 1, further comprising:
   generating, by the content creation system, a signal for displaying a graphical interface to the first user or the second user;
   receiving, by the content creation system, a selection command from the first user or the second user; and
   providing, by the content creation system, a user created element in the computing environment based on the selection command,
   wherein the graphical interface includes an adjustable timeline,
   wherein the selection command selects a time period on the adjustable timeline, and
   wherein the user created element is selected by the content creation system based on the time period.
Clause 15. A computer system for executing collaborative content creation in a computing environment using artificial intelligence comprising:
   a memory storing instructions; and
   one or more processors configured to execute the instructions to perform operations including:
      receiving, by a content creation system, a first input from a first user and a second input from a second user,
      analyzing, by an input fusion system, the first input and the second input to determine a presence of duplicate data, redundancy data, and/or prompt data by using a machine learning model,
      upon determining the presence of the prompt data from at least one of the first input or the second input, transmitting, by the input fusion system, the prompt data to an action generation system,
      generating, by the action generation system, first action data based on the prompt data and the machine learning model; and
      executing, by the action generation system, a first action in the computing environment based on the first action data.
Clause 16. The system of clause 15, wherein the operations further comprise, upon determining the presence of the duplicate data, removing, by the input fusion system, the duplicate data from at least one of the first input or the second input.
Clause 17. The system of clause 15, wherein the operations further comprise, upon determining the presence of the duplicate data and the redundancy data, removing, by the input fusion system, the duplicate data and the redundancy data from at least one of the first input or the second input.
Clause 18. The system of clause 15, wherein at least one of the first input or the second input comprises text data.
Clause 19. The system of clause 15, wherein the operations further comprise converting, by the input fusion system, at least one of the first input or the second input into converted data,
   wherein at least one of the first input or the second input comprises at least one of image data, audio data, or haptic data, and
   wherein the converted data comprises converted text data.
Clause 20. The system of clause 19, wherein the operations further comprise, upon determining the presence of the duplicate data or the redundancy data, removing, by the input fusion system, text data corresponding to at least one of the duplicate data or the redundancy data from the converted text data.
Clause 21. The system of clause 15, wherein the machine learning model facilitates determining the presence of the duplicate data, the redundancy data, and/or the prompt data based on a direct user input or an indirect user input.
Clause 22. The system of clause 15, wherein the computing environment is a virtual environment.
Clause 23. The system of clause 15, wherein the computing environment is an augmented environment.
Clause 24. The system of clause 22, wherein the first action is creating or modifying an element in a space of the virtual environment.
Clause 25. The system of clause 24, wherein the element is at least one of a visual element or an audio element.
Clause 26. The system of clause 15, wherein the first input and the second input are received synchronously.
Clause 27. The system of clause 15, wherein the fast input and the second input are received asynchronously.
Clause 28. A non-transitory computer-readable medium storing instructions that, when executed by one or more processors of a computer system, cause the computer system to perform a method for executing collaborative content creation in a computing environment using artificial intelligence, the method comprising:
   receiving, by a content creation system, a first input from a first user and a second input from a second user,
   analyzing, by an input fusion system, the first input and the second input to detect at least one of duplicate data, redundancy data, or prompt data by using a machine learning model,
   upon detecting the prompt data from at least one of the first input or the second input, transmitting, by the input fusion system, the prompt data to an action generation system,
   generating, by the action generation system, first action data based on the prompt data and the machine learning model; and
   executing, by the action generation system, a first action in the computing environment based on the first action data.
Clause 29. A method for executing content creation in a computing environment using artificial intelligence, the method comprising:
   receiving, by a content creation system, a first input and a second input,
   analyzing, by an input fusion system, the first input and the second input to determine a presence of duplicate data, redundancy data, and/or prompt data by using a machine learning model,
   upon determining the presence of the prompt data from at least one of the first input or the second input, transmitting, by the input fusion system, the prompt data to an action generation system,
   generating, by the action generation system, first action data based on the prompt data and the machine learning model; and
   executing, by the action generation system, a first action in the computing environment based on the first action data.
Clause 30. The method of clause 29, wherein the first input and the second input arc received asynchronously.
Clause 31. The method of clause 29, wherein the first input and the second input arc received synchronously.

## Claims

1. A method for executing collaborative content creation in a computing environment using artificial intelligence, the method comprising:
receiving, by a content creation system, a first input from a first user and a second input from a second user,
analyzing, by an input fusion system, the first input and the second input to determine a presence of duplicate data, redundancy data, and/or prompt data by using a machine learning model,
upon determining the presence of the prompt data from at least one of the first input or the second input, transmitting, by the input fusion system, the prompt data to an action generation system,
generating, by the action generation system, first action data based on the prompt data and the machine learning model; and
executing, by the action generation system, a first action in the computing environment based on the first action data.

2. The method of claim 1, further comprising, upon determining the presence of the duplicate data in at least one of the first input or the second input, removing, by the input fusion system, the duplicate data from at least one of the first input or the second input.

3. The method of claim 1 or claim 2, further comprising, upon determining the presence of the duplicate data and the redundancy data in at least one of the first input or the second input, removing, by the input fusion system, the duplicate data and the redundancy data from at least one of the first input or the second input.

4. The method of any preceding claim, further comprising converting, by the input fusion system, at least one of the first input or the second input into converted data,
wherein at least one of the first input or the second input comprises at least one of image data, audio data, or haptic data, and wherein the converted data comprises converted text data; and
preferably, further comprising, upon determining the presence of the duplicate data or the redundancy data, removing, by the input fusion system, text data corresponding to at least one of the duplicate data or the redundancy data from the converted text data.

5. The method of any preceding claim, wherein the machine learning model facilitates determining the presence of the duplicate data, the redundancy data, and/or the prompt data based on a direct user input or an indirect user input.

6. The method of any preceding claim, wherein the computing environment is a virtual environment; or
wherein the computing environment is an augmented environment.

7. The method of any preceding claim, further comprising:
generating, by the content creation system, a signal for displaying a graphical interface to the first user or the second user;
receiving, by the content creation system, a selection command from the first user or the second user; and
providing, by the content creation system, a user created element in the computing environment based on the selection command,
wherein the graphical interface includes an adjustable timeline,
wherein the selection command selects a time period on the adjustable timeline, and
wherein the user created element is selected by the content creation system based on the time period.

8. A computer system for executing collaborative content creation in a computing environment using artificial intelligence comprising:
a memory storing instructions; and
one or more processors configured to execute the instructions to perform operations including:
receiving, by a content creation system, a first input from a first user and a second input from a second user,
analyzing, by an input fusion system, the first input and the second input to determine a presence of duplicate data, redundancy data, and/or prompt data by using a machine learning model,
upon determining the presence of the prompt data from at least one of the first input or the second input, transmitting, by the input fusion system, the prompt data to an action generation system,
generating, by the action generation system, first action data based on the prompt data and the machine learning model; and
executing, by the action generation system, a first action in the computing environment based on the first action data.

9. The system of claim 8, wherein the operations further comprise, upon determining the presence of the duplicate data, removing, by the input fusion system, the duplicate data from at least one of the first input or the second input.

10. The system of claim 8 or claim 9, wherein the operations further comprise, upon determining the presence of the duplicate data and the redundancy data, removing, by the input fusion system, the duplicate data and the redundancy data from at least one of the first input or the second input.

11. The method of any one of claims 1 to 7, or the system of any one of claims 8 to 10, wherein at least one of the first input or the second input comprises text data.

12. The system of any one of claims 8 to 11, wherein the operations further comprise converting, by the input fusion system, at least one of the first input or the second input into converted data,
wherein at least one of the first input or the second input comprises at least one of image data, audio data, or haptic data, and
wherein the converted data comprises converted text data; and
preferably, wherein the operations further comprise, upon determining the presence of the duplicate data or the redundancy data, removing, by the input fusion system, text data corresponding to at least one of the duplicate data or the redundancy data from the converted text data.

13. The method of any one of claims 1 to 7 or 11, or the system of any one of claims 8 to 12, wherein the machine learning model facilitates determining the presence of the duplicate data, the redundancy data, and/or the prompt data based on a direct user input or an indirect user input.

14. The system of any one of claims 8 to 13, wherein the computing environment is a virtual environment.

15. The system of any one of claims 8 to 13, wherein the computing environment is an augmented environment.

16. The method of claim 6, or the system of claim 14, wherein the first action is creating or modifying an element in a space of the virtual environment; and
preferably, wherein the element is at least one of a visual element or an audio element.

17. A non-transitory computer-readable medium storing instructions that, when executed by one or more processors of a computer system, cause the computer system to perform a method for executing collaborative content creation in a computing environment using artificial intelligence, the method comprising:
receiving, by a content creation system, a first input from a first user and a second input from a second user,
analyzing, by an input fusion system, the first input and the second input to detect at least one of duplicate data, redundancy data, or prompt data by using a machine learning model,
upon detecting the prompt data from at least one of the first input or the second input, transmitting, by the input fusion system, the prompt data to an action generation system,
generating, by the action generation system, first action data based on the prompt data and the machine learning model; and
executing, by the action generation system, a first action in the computing environment based on the first action data.

18. A method for executing content creation in a computing environment using artificial intelligence, the method comprising:
receiving, by a content creation system, a first input and a second input,
analyzing, by an input fusion system, the first input and the second input to determine a presence of duplicate data, redundancy data, and/or prompt data by using a machine learning model,
upon determining the presence of the prompt data from at least one of the first input or the second input, transmitting, by the input fusion system, the prompt data to an action generation system,
generating, by the action generation system, first action data based on the prompt data and the machine learning model; and
executing, by the action generation system, a first action in the computing environment based on the first action data.

19. The method of any one of claims 1 to 7, 11, 13, 16 or 18, or the system of any one of claims 8 to 16, wherein the first input and the second input are received asynchronously.

20. The method of any one of claims 1 to 7, 11, 13, 16 or 18, or the system of any one of claims 8 to 16, wherein the first input and the second input are received synchronously.
